# EUROPÄISCHE PATENTANMELDUNG

(11) **EP 3 081 302 A1**
(43) Veröffentlichungstag der Anmeldung: **19.10.2016**
(21) Anmeldenummer: 15163627.1
(22) Anmeldetag: 15.04.2015
(51) Int. Cl.: B01L 7/00, B01L 9/00

(54) **TEMPERIERBARES GEHÄUSE FÜR REAGENZFLÜSSIGKEITSBEHÄLTER**

(71) Anmelder: Siemens Healthcare Diagnostics Products GmbH, 35041 Marburg (DE)
(72) Erfinder: Anderle, Klaus, 61476 Kronberg (DE); Moser, Kristin, 65779 Kelkheim (DE)

(57) **Zusammenfassung**

Die vorliegende Erfindung liegt auf dem Gebiet der automatischen Analysegeräte und betrifft ein Gehäuse (1) für Reagenzflüssigkeitsbehälter (4), welches eine Vorrichtung zur Veränderung der Temperatur im Gehäuseinneren aufweist, sowie ein automatisches Analysegerät, in dem mindestens ein Reagenzflüssigkeitsbehälter (4) enthalten ist, der in einem erfindungsgemäßen Gehäuse (1) gelagert ist.

## Beschreibung

Die vorliegende Erfindung liegt auf dem Gebiet der automatischen Analysegeräte und betrifft ein Gehäuse für Reagenzflüssigkeitsbehälter, welches eine Vorrichtung zur Veränderung der Temperatur im Gehäuseinneren aufweist, sowie ein automatisches Analysegerät, in dem mindestens ein Reagenzflüssigkeitsbehälter enthalten ist, der in einem erfindungsgemäßen Gehäuse gelagert ist.

Heutige Analysegeräte, wie sie routinemäßig in der Analytik, der Forensik, der Mikrobiologie und der klinischen Diagnostik Verwendung finden, sind in der Lage, eine Vielzahl von Nachweisreaktionen und Analysen mit einer Vielzahl von Proben durchzuführen. Um eine Vielzahl von Untersuchungen automatisiert durchführen zu können, sind diverse automatisch arbeitende Vorrichtungen zum räumlichen Transfer von Messzellen, Reaktionsbehältern und Reagenzflüssigkeitsbehältern erforderlich, wie z.B. Transferarme mit Greiffunktion, Transportbänder oder drehbare Transporträder, sowie Vorrichtungen zum Transfer von Flüssigkeiten, wie z.B. Pipettiervorrichtungen. Die Geräte umfassen eine zentrale Steuereinheit, die mittels entsprechender Software dazu in der Lage ist, die Arbeitsschritte für die gewünschten Analysen weitgehend selbstständig zu planen und abzuarbeiten.

Viele der in derartigen automatisiert arbeitenden Analysegeräten verwendeten Analyseverfahren beruhen auf optischen Methoden. Besonders verbreitet sind Messsysteme, die auf photometrischen (z.B. turbidimetrischen, nephelometrischen, fluorometrischen oder luminometrischen) oder radiometrischen Messprinzipien beruhen. Diese Verfahren ermöglichen den qualitativen und quantitativen Nachweis von Analyten in flüssigen Proben, ohne zusätzliche Trennschritte vorsehen zu müssen. Die Bestimmung klinisch relevanter Parameter, wie zum Beispiel der Konzentration oder der Aktivität eines Analyten erfolgt vielfach, indem ein Aliquot einer Körperflüssigkeit eines Patienten gleichzeitig oder nacheinander mit einem oder mehreren Testreagenzien in einem Reaktionsgefäß vermischt wird, wodurch eine biochemische Reaktion in Gang gesetzt wird, die eine messbare Veränderung einer optischen Eigenschaft des Testansatzes bewirkt.

Das Messergebnis wird von dem Messsystem wiederum in eine Speichereinheit weitergeleitet und ausgewertet. Anschließend liefert das Analysegerät einem Benutzer über ein Ausgabemedium, wie z.B. einen Monitor, einen Drucker oder eine Netzwerkverbindung probenspezifische Messwerte.

Die Reagenzien, die für die Bereitstellung von verschiedenartigen, testspezifischen Reaktionsansätzen erforderlich sind, werden üblicherweise in entsprechenden ein- oder mehrkammrigen Reagenzflüssigkeitsbehältern bereit gestellt und in einem Vorratsbehälter des Analysegeräts aufbewahrt. Derartige Vorratsbehälter für Reagenzien weisen üblicherweise eine Vielzahl von Aufnahmepositionen für Reagenzflüssigkeitsbehälter auf.

In modernen Analysegeräten erfolgt die Zuführung von Reagenzflüssigkeitsbehältern in den Vorratsbehälter und auch deren Entnahme vollautomatisch mit Hilfe von Transporteinrichtungen, wie beispielsweise an Transferarmen befestigten Greifvorrichtungen. Um die Transportvorrichtungen möglichst einfach und sicher gestalten zu können, ist es vorteilhaft, wenn das Transportgut eine einheitliche äußere Form aufweist. Daher ist es üblich, in automatischen Analysegeräten, die mit verschiedenartigen Reagenzflüssigkeitsbehältern bestückbar sein sollen, Gehäuse zur Verfügung zu stellen, die zwar Reagenzflüssigkeitsbehälter unterschiedlicher Größe und Form und in unterschiedlicher Anzahl aufnehmen können, die aber ein einheitliche äußere Geometrie aufweisen. Derartige Gehäuse sind beispielsweise in EP-A1-0651254 beschrieben. Vorteilhaft ist dabei auch, dass die Aufnahmepositionen für die Reagenzflüssigkeitsbehälter innerhalb des Vorratsbehälters gleichartig ausgestaltet und platzsparend angeordnet sein können.

Um die Haltbarkeit der Reagenzien zu gewährleisten, ist der gesamte Innenraum des Vorratsbehälters auf eine Temperatur von üblicherweise +2 bis +15 °C gekühlt. Der Deckel, der den wärmeisolierten Vorratsbehälter abdeckt, weist üblicherweise eine oder mehrere Öffnungen auf, die so dimensioniert sind, dass sie die automatische Zuführung und Entnahme von Reagenzflüssigkeitsbehältern ermöglichen. Diese Öffnungen sind häufig mit einem Verschlussmechanismus ausgestattet, so dass der Wärmeaustausch mit der Umgebung auf den Vorgang der Zuführung oder Entnahme reduziert wird. Ferner weist der Deckel weitere Öffnungen mit verhältnismäßig geringen Durchmessern auf, die für den Durchtritt einer Pipettiernadel vorgesehen sind, die Reagenzflüssigkeit aus den gelagerten Reagenzflüssigkeitsbehältern entnehmen kann. Ein typischer Vorratsbehälter für Reagenzflüssigkeitsbehälter ist beispielsweise in EP-A1-2754492 beschrieben.

Problematisch ist es jedoch, wenn auf einem Analysegerät, das nur einen einzigen, gekühlten Vorratsbehälter aufweist, nun ein Test durchführbar sein soll, bei dem ein Reagenz verwendet wird, für das z.B. eine höhere Lagerungstemperatur erforderlich ist als die im Vorratsbehälter vorgegebene. Es wäre natürlich möglich einen zweiten Vorratsbehälter für Reagenzflüssigkeitsbehälter vorzusehen, der eine andere Temperatur aufweist als der erste, gekühlte Vorratsbehälter. Dies hätte jedoch den Nachteil, dass die Architektur des Analysegeräts -sofern dies überhaupt möglich wäre- aufwändig modifiziert werden müsste.

Der vorliegenden Erfindung liegt daher die Aufgabe zugrunde für ein automatisches Analysegerät, das einen einzigen Vorratsbehälter für die Aufbewahrung von Reagenzflüssigkeitsbehältern bei einer Temperatur aufweist, eine Lagerungsmöglichkeit für Reagenzflüssigkeitsbehälter bereit zu stellen, die eine Lagerung bei einer von der Temperatur des Vorratsbehälters abweichenden Temperatur ermöglicht.

Die Aufgabe wird dadurch gelöst, dass ein Gehäuse für einen Reagenzflüssigkeitsbehälter bereitgestellt wird, das eine Vorrichtung zur Veränderung der Temperatur im Gehäuseinneren umfasst.

Dies hat den Vorteil, dass auf einen aufwändigen Umbau des Analysegeräts weitestgehend verzichtet werden kann.

Gegenstand der vorliegenden Erfindung ist damit ein Gehäuse für mindestens einen Flüssigkeitsbehälter mit einem Boden, Seitenwänden und einer Öffnung, wobei das Gehäuse einen Boden, Seitenwände und einen Hohlraum zur formschlüssigen Aufnahme des Bodens und der Seitenwände des Flüssigkeitsbehälters umfasst, und wobei das Gehäuse zusätzlich eine Vorrichtung zur Veränderung der Temperatur des Hohlraums aufweist.

Dies hat den Vorteil, dass ein oder mehrere Flüssigreagenzien in Reagenzflüssigkeitsbehältern, die in einem erfindungsgemäßen Gehäuse gelagert sind, auf eine von der Umgebungstemperatur abweichende Temperatur erwärmt oder abgekühlt werden können.

Vorzugsweise ist die Vorrichtung zur Veränderung der Temperatur des Gehäusehohlraums im Bodenbereich des Gehäuses angebracht.

Die in das Gehäuse integrierte Vorrichtung zur Veränderung der Temperatur des Gehäusehohlraums kann ein oder mehrere Heizelemente und/oder ein oder mehrere Kühlelemente umfassen.

Es werden vorzugsweise elektrische Heizelemente verwendet, die elektrischen Strom in Wärme umwandeln, wie beispielsweise Heizwendeln, Heizpatronen, Heizbänder, Heizmanschetten, Heizmatten oder Peltier-Elemente.

Entsprechend werden vorzugsweise elektrische Kühlelemente verwendet, wie beispielsweise Peltier-Elemente.

In einer bevorzugten Ausführungsform umfasst das Gehäuse ein einziges Peltier-Element. Ein Peltier-Element ist ein elektrothermischer Wandler, der sowohl zur Kühlung als auch bei Stromrichtungsumkehr zum Heizen verwendet werden kann.

In einer bevorzugten Ausführungsform umfasst das Gehäuse für den Betrieb der Vorrichtung zur Veränderung der Temperatur des Gehäusehohlraums eine elektrische Energiequelle, beispielsweise in Form einer galvanischen Zelle. Dies hat den Vorteil, dass das Gehäuse völlig unabhängig vom verwendeten Analysegerät anwendbar ist, d.h. dass das Analysegerät keinerlei spezifische Anpassung für die Aufnahme eines solchen selbstversorgenden Gehäuses aufweisen muss.

Typische Beispiele für geeignete elektrische Energiequellen sind Alkali-Mangan-Batterien, Zink-Kohle-Batterien oder andere nach dem Entladen nicht mehr wieder aufladbare Primärzellen. Besonders bevorzugt sind jedoch wiederaufladbare Akkumulatoren (kurz: Akkus), wie beispielsweise Lithium-Ionen- oder Natrium-Nickel-Akkumulatoren.

Vorzugsweise ist die elektrische Energiequelle in einem abgeschlossen Hohlraum im Bodenbereich des Gehäuses angebracht. Um die Batterie oder den Akku austauschen zu können, weist der Hohlraum eine mit einem Deckel verschließbare Öffnung auf.

In einer anderen Ausführungsform ist das Gehäuse an eine externe Stromversorgung wie ein Stromnetz oder eine externe elektrische Energiequelle anschließbar. Dazu umfasst das Gehäuse ein erstes Verbindungselement zur Herstellung einer lösbaren elektrischen Verbindung, wie beispielsweise einen Stecker oder eine Steckerbuchse.

In Kombination mit einem Gehäuse, das einen wiederaufladbaren Akkumulator als elektrische Energiequelle enthält, dient die elektrische Verbindung mit einer externen Stromversorgung dem Aufladen des Akkumulators. Dies erfolgt typischerweise in einer entsprechenden Ladestation.

In einer anderen Ausführungsform umfasst das Gehäuse keine eigene elektrische Energiequelle, sondern das erste Verbindungslement zur Herstellung einer lösbaren elektrischen Verbindung dient der Herstellung einer direkten Stromversogung für die Vorrichtung zur Veränderung der Temperatur des Gehäusehohlraums. Diese Ausführungsform erfordert zwar eine entsprechende Anpassung des Analysegeräts, aber sie hat den Vorteil, dass auf ein regelmäßiges Austauschen oder Aufladen der Batterien oder Akkus verzichtet werden kann. Für die Verwendung eines vorgenannten Gehäuses ist es erforderlich, dass mindestens eine Aufnahmeposition in dem Vorratsbehälter für die Aufbewahrung von Reagenzflüssigkeitsbehältern ein zweites Verbindungslement zur Herstellung der lösbaren elektrischen Verbindung mit dem ersten Verbindungselement des Gehäuses umfasst, wie beispielsweise einen passenden Stecker oder eine passende Steckerbuchse oder Federkontakte.

In einer anderen Ausführungsform umfasst das Gehäuse ebenfalls keine eigene elektrische Energiequelle, sondern eine Spule, in der durch ein benachbartes magnetisches Wechselfeld eine Spannung induzierbar ist. Dies hat den Vorteil, dass eine induktive, kontaktlose Energieübertragung erfolgen kann. Diese Ausführungsform erfordert zwar eine entsprechende Anpassung des Analysegeräts, aber sie hat den Vorteil, dass auf ein regelmäßiges Austauschen oder Aufladen der Batterien oder Akkus verzichtet werden kann. Für die Verwendung eines vorgenannten Gehäuses ist es erforderlich, dass mindestens eine Aufnahmeposition in dem Vorratsbehälter für die Aufbewahrung von Reagenzflüssigkeitsbehältern einen Generator für ein magnetisches Wechselfeld umfasst, wie beispielsweise eine von Wechselstrom durchflossene Spule.

In noch einer anderen Ausführungsform umfasst das Gehäuse weder eine eigene elektrische Energiequelle noch ein Heiz**-** oder Kühlelement, sondern einen Boden aus elektrisch leitfähigem, vorzugsweise aus ferromagnetischem Material, wie beispielsweise eisen- oder nickelhaltige Legierungen. Derartige Gehäuse eignen sich zur induktiven Wärmeerzeugung durch Wechselwirkung mit einem elektromagnetischen Wechselfeld. Die in das Gehäuse integrierte Vorrichtung zur Veränderung der Temperatur des Gehäusehohlraums besteht in dieser Ausführungsform also aus dem Gehäuseboden, der aus elektrisch leitfähigem, vorzugsweise aus ferromagnetischem Material besteht. Auch diese Ausführungsform erfordert zwar eine entsprechende Anpassung des Analysegeräts, aber sie hat den Vorteil, dass auf ein regelmäßiges Austauschen oder Aufladen der Batterien oder Akkus verzichtet werden kann. Für die Verwendung eines vorgenannten Gehäuses ist es erforderlich, dass mindestens eine Aufnahmeposition in dem Vorratsbehälter für die Aufbewahrung von Reagenzflüssigkeitsbehältern eine stromdurchflossene Spule, die ein magnetisches Wechselfeld erzeugt, aufweist.

Die Seitenwände eines erfindungsgemäßen Gehäuses sind vorzugsweise mehrschichtig aufgebaut. Die innerste, den Hohlraum umgebende Schicht, die in direktem Kontakt mit einem eingesetzten Reagenzflüssigkeitsbehälter steht, besteht vorzugsweise aus einem Material mit hoher Wärmeleitfähigkeit, wie beispielsweise aus einem Metall, wie z.B. Aluminium oder Kupfer. Mindestens eine weiter außen liegende Schicht dient der Wärmeisolierung und besteht aus einem Material mit geringer Wärmeleitfähigkeit. Besonders geeignete Isoliermaterialien sind Schaumstoffe, wie beispielsweise expandiertes oder extrudiertes Polystyrol (auch bekannt unter dem Handelsnamen STYROPOR) oder auch ein geschlossenporiger Polymethacrylmethylimid-Hartschaumstoff (auch bekannt unter dem Handelsnamen ROHACELL). Die äußerste Schicht besteht vorzugsweise aus einem Kunstoff, vorteilhafterweise aus einem glasfaserverstärkten und elektrisch leitendem Hartkunststoff, wie beispielsweise Polyamid.

Eine bevorzugte Ausführungsform eines erfindungsgemäßen Gehäuses weist einen Deckel zum Verschluss des Gehäusehohlraums auf. Dies hat den Vorteil, dass der temperierte Gehäuseinnenraum gegenüber der Umgebung abgeschlossen ist und damit der Einfluss der Umgebungstemperatur auf die Temperatur im Gehäuseinnenraum minimiert wird. Der Deckel ist an der Oberseite des Gehäuses angebracht. Der Deckel kann z.B. als separates Bauteil ausgebildet sein, das über ein Scharnier an dem Gehäuse befestigt ist. Alternativ können Deckel und Gehäuse, insbesondere wenn sie aus Kunststoff bestehen, einteilig ausgebildet sein und über ein Filmscharnier, also eine dünnwandige falzartige Verbindung, miteinander verbunden sein. Vorzugsweise enthält der Deckel ein Pipettierloch, also eine Öffnung mit verhältnismäßig geringem Durchmesser, die so angeordnet ist, dass sie oberhalb der Öffnung eines in dem Gehäuse gelagerten Reagenzflüssigkeitsbehälters zu liegen kommt. Dies ermöglicht die Entnahme von Reagenz mittels einer Pipettiervorrichtung bei geschlossenem Deckel, so dass trotz Zugänglichkeit eine weitestgehende Isolierung des Gehäuseinnenraums gewährleistet ist.

Ein erfindungsgemäßes Gehäuse kann zusätzlich einen Temperatursensor umfassen. Bekannte Temperatursensoren sind elektronische Bauelemente, die ein elektrisches Signal als Maß für die Temperatur liefern, wie beispielsweise Messwiderstände, Halbleiter-Temperatursensoren oder Thermoelemente. Der Temperatursensor ist so in dem Gehäuse angebracht, dass er die Messung der Temperatur im Hohlraum oder in einem Hohlraum-nahen Bereich des Gehäuses ermöglicht. Vorzugsweise umfasst ein erfindungsgemäßes Gehäuse zusätzlich eine Steuerung für die Vorrichtung zur Veränderung der Temperatur. Die Steuerung kann in Form eines integrierten Schaltkreises auf einem Mikrokontroller (Chip) angeordnet sein. Vorzugsweise empfängt die Steuerung die vom Temperatursensor gemessenen Temperaturdaten und vergleicht diese mit einer vorgegeben Soll-Temperatur oder einem Temperaturbereich. Weicht die gemessene Temperatur von der Soll-Temperatur ab, aktiviert die Steuerung das Heiz- bzw. Kühlelement. Ist die Soll-Temperatur erreicht, deaktiviert die Steuerung das Heiz- bzw. Kühlelement.

Ein erfindungsgemäßes Gehäuse kann mehr als einen Hohlraum zur Aufnahme eines Flüssigkeitsbehälters umfassen bzw. der eine Hohlraum kann durch eingebrachte Trennwände für die formschlüssige Aufnahme mehrerer Flüssigkeitsbehälter vorgesehen sein.

Der Hohlraum des Gehäuses ist für eine formschlüssige Aufnahme des Bodens und der Seitenwände eines Flüssigkeitsbehälters ausgestaltet, d.h. der Hohlraum hat im Wesentlichen die Form eines einseitig geschlossenen Zylinders, wobei die Grundfläche des Zylinders kreisförmig, elliptisch oder mehreckig, z.B. viereckig gestaltet sein kann. Übliche Flüssigkeitsbehälter für Reagenzien sind flaschenförmig ausgestaltet. Demgemäß hätte ein geeigneter Gehäusehohlraum zur aufrechten Lagerung eines flaschenförmigen Reagenzflüssigkeitsbehälters die Form eines geraden Zylinders. In einer besonderen Ausführungsform ist der Hohlraum des Gehäuses relativ zum Gehäuseboden als schiefer Zylinder ausgebildet, so dass ein darin gelagerter Reagenzflüssigkeitsbehälters in leicht geneigter Position gelagert wird. Diese Schrägstellung hat den Vorteil, dass sich Reagenzflüssigkeitsreste in dem Bereich zwischen Behälterboden und Behälterseitenwand sammeln und so eine restlose Entnahme der Reagenzflüssigkeit ermöglicht wird.

Ein weiterer Gegenstand der vorliegenden Erfindung ist ein erfindungsgemäßes Gehäuse, in dem ein Flüssigkeitsbehälter gelagert ist. Der Flüssigkeitsbehälter ist vorzugsweise ein Reagenzflüssigkeitsbehälter, der ein flüssiges Reagenz enthält, welches für die Durchführung eines analytischen Testverfahrens in einem automatischen Analysegerät vorgesehen ist. Der Flüssigkeitsbehälter kann einkammrig ausgestaltet sein, oder er kann mehrkammrig ausgestaltet sein, so dass er mehrere Flüssigkeiten getrennt enthalten kann.

In einer besonderen Ausführungsform eines Gehäuses, in dem ein Reagenzflüssigkeitsbehälter gelagert ist, weist der Reagenzflüssigkeitsbehälter eine Verschlussvorrichtung auf, die derart ausgestaltet ist, dass sie nicht nur die Öffnung des Reagenzflüssigkeitsbehälters verschließt, sondern auch die Öffnung des Gehäuseinnenraums weitestgehend abdeckt. Dies hat den Vorteil, dass der temperierte Gehäuseinnenraum gegenüber der Umgebung abgeschlossen ist und damit der Einfluss der Umgebungstemperatur auf die Temperatur im Gehäuseinnenraum minimiert wird. Ferner kann auf einen an dem Gehäuse angebrachten Deckel verzichtet werden.

Eine solche am Reagenzflüssigkeitsbehälter angebrachte Verschlussvorrichtung kann beispielsweise in Form eines Stopfens ausgebildet sein, der in die Öffnung des Reagenzflüssigkeitsbehälters gepresst wird, wobei der Teil des Stopfens, der sich außerhalb der Öffnung des Reagenzflüssigkeitsbehälters befindet, plattenförmig ausgebildet ist und dessen Form und Größe dem Querschnitt der Gehäuseöffnung entspricht. Ferner kann die Verschlussvorrichtung in Form eines Deckels ausgebildet sein, der über die Öffnung des Reagenzflüssigkeitsbehälters gestülpt wird, wobei die Oberseite des Deckels plattenförmig ausgebildet ist und eine Form und Größe aufweist, die dem Querschnitt der Gehäuseöffnung entspricht. Deckelförmige Verschlussvorrichtungen können beispielsweise über ein Schraubgewinde an dem Reagenzflüssigkeitsbehälter angebracht werden. Vorzugsweise weisen die stopfen- oder deckelförmigen Verschlussvorrichtungen eine Öffnung mit verhältnismäßig geringem Durchmesser auf. Dies ermöglicht die Entnahme von Reagenz mittels einer Pipettiervorrichtung.

Alternativ kann die am Reagenzflüssigkeitsbehälter angebrachte Verschlussvorrichtung, die auch die Öffnung des Gehäuseinnenraums weitestgehend abdeckt, so ausgestaltet sein, dass sie in einer Geschlossenstellung die Öffnung des Reagenzflüssigkeitsbehälters bedeckt und in einer Offenstellung nicht oder zumindest nicht vollständig bedeckt. Derartige Verschlussvorrichtungen, die insbesondere auch mit Hilfe geeigneter Vorrichtungen automatisch betätigt werden können, sind beispielsweise in EP-A2-1046915 und EP-A2-2422879 beschrieben. Die darin beschriebenen mehrteiligen Verschlussvorrichtungen sind für die vorliegende Erfindung jeweils lediglich so zu modifizieren, dass der mit dem Reagenzflüssigkeitsbehälter verbundene Teil eine Form und Größe aufweist, die dem Querschnitt der Gehäuseöffnung entspricht. Diese Ausführungsform hat den zusätzlichen Vorteil, dass der Inhalt des Reagenzflüssigkeitsbehälters vor Verdunstung und Kontamination geschützt wird.

Ein weiterer Gegenstand der vorliegenden Erfindung ist ein Verfahren zur Aufbewahrung von Reagenzflüssigkeitsbehältern in einem Vorratsbehälter eines automatischen Analysegeräts, wobei der Vorratsbehälter eine Vielzahl von Aufnahmepositionen für in erfindungsgemäßen Gehäusen gelagerte Reagenzflüssigkeitsbehälter aufweist und wobei dem Vorratsbehälter ein oder mehrere Reagenzflüssigkeitsbehälter zugeführt werden, die in einem erfindungsgemäßen Gehäuse gelagert sind. Vorzugsweise erfolgt die Zuführung der Gehäuse mit den darin gelagerten Reagenzflüssigkeitsbehältern automatisch mit Hilfe einer Transportvorrichtung, wie beispielsweise mit einem an einem Transportarm befestigten Greifer.

Dies hat den Vorteil, dass in Analysegeräten, die nur über einen Vorratsbehälter für Reagenzien verfügen, nun eine Lagerungsmöglichkeit für Reagenzflüssigkeitsbehälter besteht, die eine Lagerung bei einer oder mehreren von der Temperatur des Vorratsbehälters abweichenden Temperatur(en) ermöglicht. Es ist natürlich möglich, gleichzeitig mehrere Gehäuse mit verschiedenen Soll-Temperaturen einzusetzen. Dies ermöglicht die optimale Temperierung für jedes Reagenz.

Ein weiterer Gegenstand der vorliegenden Erfindung ist ein automatisches Analysegerät mit mindestens einer Messvorrichtung, mit mindestens einer Pipettiervorrichtung zur Entnahme von Reagenzflüssigkeit aus Reagenzflüssigkeitsbehältern und mit mindestens einem Vorratsbehälter mit einer Vielzahl von Aufnahmepositionen für eine Vielzahl von Gehäusen enthaltend Reagenzflüssigkeitsbehälter, wobei in dem Vorratsbehälter mindestens ein Reagenzflüssigkeitsbehälter enthalten ist, der in einem erfindungsgemäßen Gehäuse gelagert ist.

Wenn in Bezug auf die Erfindung von einem Vorratsbehälter für Reagenzflüssigkeitsbehälter die Rede ist, ist ein Vorratsbehälter für Reagenzien gemeint, der die Entnahme von Reagenzflüssigkeit aus den Reagenzflüssigkeitsbehältern mittels automatischer Pipettiervorrichtungen erlaubt. Derartige Vorratsbehälter sind zu unterscheiden von etwaigen weiteren Vorratsbehältern in dem Analysegerät, die zwar auch Reagenzflüssigkeitsbehälter vorrätig halten, aber nur um leere oder nicht mehr benötigte Reagenzflüssigkeitsbehälter in dem Vorrat, der für die Pipettiervorrichtung zugänglich ist, zu ersetzen. Diese zusätzlichen Vorratsbehälter sind im Allgemeinen nicht so beschaffen, dass aus einem darin gelagerten Reagenzflüssigkeitsbehälter Reagenzflüssigkeit mittels einer Pipettiervorrichtung entnehmbar wäre.

In bestimmten Ausführungsformen des automatischen Analysegeräts, die sich für die Aufnahme von temperierbaren Gehäusen für Reagenzflüssigkeitsbehälter eignen, die keine eigene elektrische Energiequelle aufweisen und daher mit externer Energie betrieben werden müssen, sind entsprechend modifizierte Aufnahmepositionen in dem Vorratsbehälter vorgesehen.

In solch einer Ausführungsform des automatischen Analysegeräts umfasst mindestens eine Aufnahmeposition in dem Vorratsbehälter eine Stromleitung mit einem zweiten Verbindungselement zur Herstellung einer lösbaren elektrischen Verbindung mit einem entsprechenden Verbindungselement eines erfindungsgemäßen Gehäuses, das keine eigene elektrische Energiequelle umfasst, also beispielsweise einen passenden Stecker oder eine passende Steckerbuchse oder Federkontakte.

In einer anderen Ausführungsform des automatischen Analysegeräts umfasst mindestens eine Aufnahmeposition eine stromdurchflossene Spule zur Erzeugung eines magnetischen Wechselfeldes. Ein solches Analysegerät eignet sich für die Aufnahme von Gehäusen, die für eine induktive, kontaktlose Energieübertragung bzw. für eine induktive Wärmeerzeugung vorgesehen sind.

Verschiedene Ausführungsformen der Erfindung werden anhand von Zeichnungen näher erläutert.

### FIGURENBESCHREIBUNG

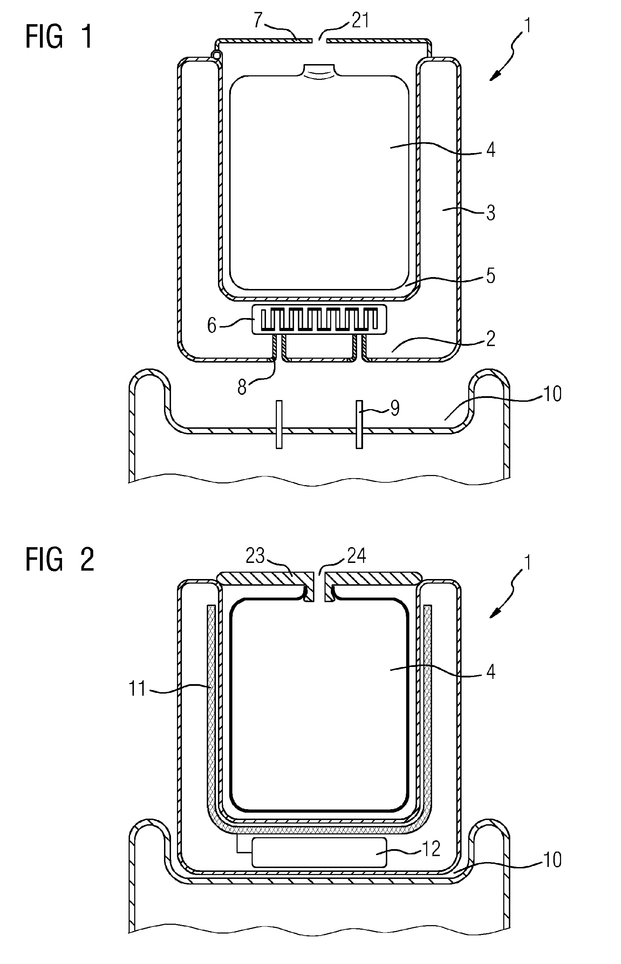

FIG. 1 zeigt einen Reagenzflüssigkeitsbehälter 4 in einem Gehäuse 1 mit einem Boden 2, Seitenwänden 3 und einem Hohlraum 5. Im Boden 2 des Gehäuses 1 ist ein Peltier-Element 6 vorgesehen. Das Peltier-Element 6 wird mit elektrischer Energie versorgt, indem über im Gehäuseboden vorgesehene Buchsen 8 und in der Aufnahmeposition 10 eines nicht näher gezeigten automatischen Analysegeräts vorgesehene Stecker 9 eine elektrische Verbindung hergestellt wird. Das Peltier-Element 6 kann sowohl zur Kühlung als auch zur Erwärmung des Hohlraums 5 und damit des Reagenzflüssigkeitsbehälters 4 verwendet werden. Zur Isolierung des Gehäuseinnenraums 5 ist auf der Oberseite des Gehäuses 1 ein Deckel 7 vorgesehen, mit dem die Öffnung des Gehäuses 1 verschlossen werden kann. Der Deckel 7 enthält ein Pipettierloch 21 mit verhältnismäßig geringem Durchmesser. Dies ermöglicht die Entnahme von Flüssigkeit aus dem Reagenzflüssigkeitsbehälter 4 mittels einer Pipettiervorrichtung bei geschlossenem Deckel, so dass trotz Zugänglichkeit eine weitestgehende Isolierung des Gehäuseinnenraums gewährleistet ist.
FIG. 2 zeigt einen Reagenzflüssigkeitsbehälter 4 in einem Gehäuse 1, in dem eine Heizfolie 11 den Hohlraum 5 zur Aufnahme des Reagenzflüssigkeitsbehälters 4 seitlich und auf der Unterseite umschließt. Die Heizfolie 11 wird mittels einer Batterie 12 mit elektrischer Energie versorgt. In dieser Ausführungsform ist keine besondere Anpassung der Aufnahmeposition 10 erforderlich. Im Boden des Gehäuses 1 befindet sich eine nicht näher gezeigte Öffnung, die durch einen Deckel verschließbar ist und durch welche die Batterie 12 ausgetauscht werden kann. Am Reagenzflüssigkeitsbehälter 4 ist ein Stopfen 23 angebracht, der in die Öffnung des Reagenzflüssigkeitsbehälters 4 gepresst ist und der in dem Bereich, der sich außerhalb der Öffnung des Reagenzflüssigkeitsbehälters 4 befindet plattenförmig ausgebildet ist und dessen Form und Größe dem Querschnitt der Gehäuseöffnung entspricht, so dass der Gehäuseinnenraum gegenüber der Umgebung isoliert ist. Der Stopfen 23 weist eine Bohrung 24 auf, durch die mit einer Pipettiernadel (nicht dargestellt) Reagenzflüssigkeit aus dem Behälter 4 entnommen werden kann.

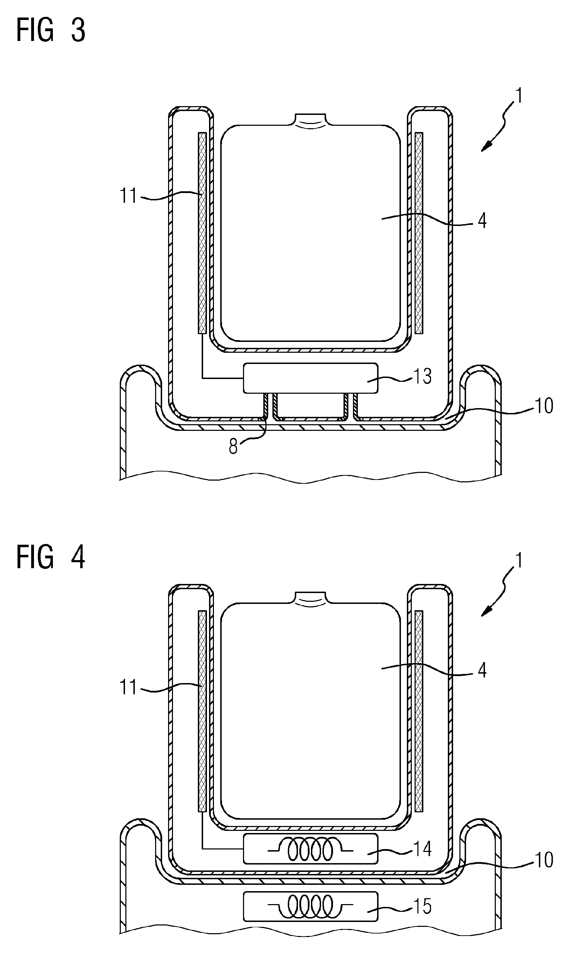

FIG. 3 zeigt einen Flüssigkeitsbehälter 4 in einem Gehäuse 1, in dem eine Heizfolie 11 den Hohlraum 5 zur Aufnahme des Flüssigkeitsbehälters 4 seitlich umschließt. Die Heizfolie 11 wird mittels eines wiederaufladbaren Akkus 13 mit elektrischer Energie versorgt. Das Wiederaufladen des Akkus 13 erfolgt vorzugsweise außerhalb des automatischen Anaylsegeräts, so dass keine besondere Anpassung der Aufnahmeposition 10 erforderlich ist. Um das Wiederaufladen des Akkus 13 in einer nicht näher gezeigten Aufladestation zu ermöglichen, sind im Gehäuseboden Buchsen 8 vorgesehen, die mit entsprechenden Steckern in der Aufladestation eine elektrische Verbindung herstellen können. Dies hat den Vorteil, dass der Akku zum Entladen nicht aus dem Gehäuse entnommen werden muss.
FIG. 4 zeigt einen Flüssigkeitsbehälter 4 in einem Gehäuse 1, das eine Heizfolie 11 enthält. Die Heizfolie 11 wird durch eine Spule 14 mit elektrischer Energie versorgt. In der Spule 14 wird eine Spannung erzeugt, wenn das Gehäuse 1 in eine Aufnahmeposition 10 eingesetzt wird, in der sich ein Generator 15 für ein magnetisches Wechselfeld befindet. Diese Ausführungsform hat den Vorteil, dass auf einen Austausch von Batterien oder Akkus verzichtet werden kann.

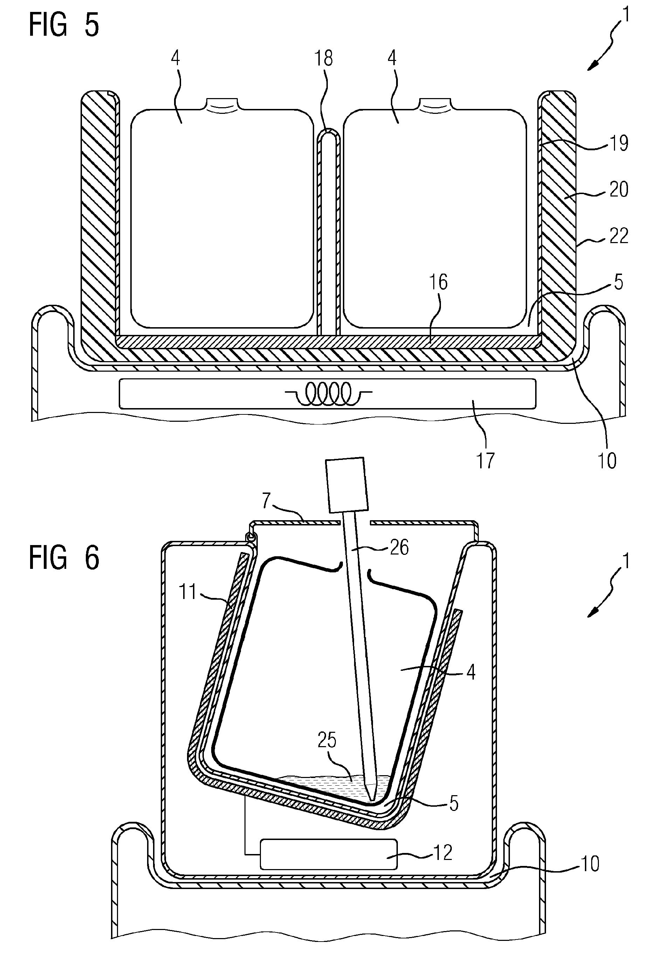

FIG. 5 zeigt ein Gehäuse 1 mit einer Trennwand 18, das für die Aufnahme von zwei Flüssigkeitsbehältern 4 ausgelegt ist. Der Boden 16 des Gehäuses 1 besteht aus Edelstahl und ist durch Wechselwirkung mit einer in der Aufnahmeposition 10 angeordneten Spule 17, die ein magnetisches Wechselfeld erzeugt, induktiv erwärmbar. Die Innenwand des Hohlraums 5 des Gehäuses 1 besteht aus einer Aluminiumschicht 19, die die im Boden erzeugte Wärme besonders gut leitet und gleichmäßig verteilt. Nach außen hin umfasst das Gehäuse 1 ferner eine Isolierschicht 20 aus STYROPOR, um den Wärmeaustausch mit der Umgebung möglichst gering zu halten. Die äußerste Schicht 22 des Gehäusekörpers besteht aus Polyamid.
FIG. 6 zeigt einen Reagenzflüssigkeitsbehälter 4 in einem Gehäuse 1, in dem eine Heizfolie 11 den Hohlraum 5 zur Aufnahme des Reagenzflüssigkeitsbehälters 4 seitlich und auf der Unterseite umschließt. Die Heizfolie 11 wird mittels einer Batterie 12 mit elektrischer Energie versorgt. Zur Isolierung des Gehäuseinnenraums 5 ist ein mittels eines Scharniers beweglich am Gehäuse 1 angebrachter Deckel 7 mit einem Pipettierloch vorgesehen. Der Hohlraum 5 des Gehäuses 1 ist relativ zum Gehäuseboden als schiefer Zylinder ausgebildet, so dass der darin gelagerte Reagenzflüssigkeitsbehälter 4 in leicht geneigter Position gelagert wird. Diese Schrägstellung hat den Vorteil, dass sich Reste von Reagenzflüssigkeit 25 in dem Bereich zwischen Behälterboden und Behälterseitenwand sammeln. Auf diese Weise wird die restlose Entnahme der gesamten Reagenzflüssigkeit 25 durch eine Pipettiervorrichtung 26 ermöglicht.

### BEZUGSZEICHENLISTE

- 1: Gehäuse
- 2: Boden
- 3: Seitenwand
- 4: Reagenzflüssigkeitsbehälter
- 5: Hohlraum
- 6: Peltier-Element
- 7: Deckel
- 8: Buchse
- 9: Stecker
- 10: Aufnahmeposition
- 11: Heizfolie
- 12: Batterie
- 13: Akku
- 14: Spule
- 15: Generator
- 16: Boden aus Edelstahl
- 17: Spule
- 18: Trennwand
- 19: Aluminiumschicht
- 20: Isolierschicht
- 21: Pipettierloch
- 22: Polyamidschicht
- 23: Stopfen
- 24: Bohrung
- 25: Reagenzflüssigkeit
- 26: Pipettiervorrichtung

## Patentansprüche

1. Gehäuse (1) für mindestens einen Flüssigkeitsbehälter (4) mit einem Boden, Seitenwänden und einer Öffnung, wobei das Gehäuse (1) einen Boden (2), Seitenwände (3) und einen Hohlraum (5) zur formschlüssigen Aufnahme des Bodens und der Seitenwände des Flüssigkeitsbehälters umfasst, **dadurch gekennzeichnet, dass** das Gehäuse (1) zusätzlich eine Vorrichtung zur Veränderung der Temperatur des Hohlraums (5) aufweist.

2. Gehäuse (1) nach Anspruch 1, wobei die Vorrichtung zur Veränderung der Temperatur mindestens ein Heizelement und/oder mindestens ein Kühlelement umfasst.

3. Gehäuse (1) nach einem der vorhergehenden Ansprüche, das zusätzlich einen Temperatursensor umfasst.

4. Gehäuse (1) nach einem der vorhergehenden Ansprüche, das zusätzlich eine Steuerung für die Vorrichtung zur Veränderung der Temperatur umfasst.

5. Gehäuse (1) nach einem der vorhergehenden Ansprüche, das eine elektrische Energiequelle (12, 13) umfasst.

6. Gehäuse (1) nach Anspruch 5, wobei die elektrische Energiequelle ein wiederaufladbarer Akkumulator (13) ist.

7. Gehäuse (1) nach einem der vorhergehenden Ansprüche, das ein erstes Verbindungselement zur Herstellung einer lösbaren elektrischen Verbindung umfasst.

8. Gehäuse (1) nach einem der vorhergehenden Ansprüche, dessen Boden (2) aus elektrisch leitfähigem, vorzugsweise aus ferromagnetischem Material (16) besteht.

9. Gehäuse (1) nach einem der vorhergehenden Ansprüche, wobei die Seitenwände (3) des Gehäuses (1) mehrschichtig sind und wobei die innerste, den Hohlraum (5) umgebende Schicht (19) aus einem Metall besteht.

10. Gehäuse (1) nach Anspruch 9, wobei mindestens eine weiter außen liegende Schicht (20) der Seitenwände (3) aus einem isolierenden Material mit geringer Wärmeleitfähigkeit besteht.

11. Gehäuse (1) nach einem der vorhergehenden Ansprüche, das einen Deckel (7) zum Verschluss des Hohlraums (5) aufweist.

12. Verfahren zur Aufbewahrung von Reagenzflüssigkeitsbehältern (4) in einem Vorratsbehälter eines automatischen Analysegeräts, wobei der Vorratsbehälter eine Vielzahl von Aufnahmepositionen (10) für in Gehäusen (1) gelagerten Reagenzflüssigkeitsbehälter (4) aufweist, **dadurch gekennzeichnet, dass** dem Vorratsbehälter ein oder mehrere Reagenzflüssigkeitsbehälter (4) zugeführt werden, die in einem Gehäuse (1) gemäß einem der Ansprüche 1-11 gelagert sind.

13. Automatisches Analysegerät mit mindestens einer Messvorrichtung, mit mindestens einer Pipettiervorrichtung zur Entnahme von Reagenzflüssigkeit aus Reagenzflüssigkeitsbehältern (4) und mit mindestens einem Vorratsbehälter mit einer Vielzahl von Aufnahmepositionen (10) für eine Vielzahl von Gehäusen (1) enthaltend Reagenzflüssigkeitsbehälter (4), **dadurch gekennzeichnet, dass** in dem Vorratsbehälter mindestens ein Reagenzflüssigkeitsbehälter (4) enthalten ist, der in einem Gehäuse (1) gemäß einem der Ansprüche 1-11 gelagert ist.

14. Automatisches Analysegerät gemäß Anspruch 13, wobei der mindestens eine Reagenzflüssigkeitsbehälter (4) eine Verschlussvorrichtung (23) aufweist, die derart ausgestaltet ist, dass sie die Öffnung des Reagenzflüssigkeitsbehälters (4) verschließt und die Öffnung des Gehäusehohlraums (5) weitestgehend abdeckt.

15. Automatisches Analysegerät gemäß einem der Ansprüche 13 und 14, wobei mindestens eine Aufnahmeposition (10) eine Stromleitung mit einem zweiten Verbindungslement zur Herstellung einer lösbaren elektrischen Verbindung mit dem ersten Verbindungselement eines Gehäuses (1) gemäß Anspruch 7 umfasst.

16. Automatisches Analysegerät gemäß einem der Ansprüche 13 und 14, wobei mindestens eine Aufnahmeposition (10) eine stromdurchflossene Spule (14, 15) zur Erzeugung eines magnetischen Wechselfeldes umfasst.
